# EUROPEAN PATENT APPLICATION

(11) **EP 1 168 586 A1**
(43) Date of publication of application: **02.01.2002**
(21) Application number: 00113968.2
(22) Date of filing: 01.07.2000
(51) Int. Cl.: H02K 41/03, H02K 1/27

(54) **Permanent magnet motor and lift installation**

(71) Applicant: INVENTIO AG, CH-6052 Hergiswil (CH)
(72) Inventor: Zhou, Tian, Dr.Elekt.-Ing., CH-6014 Littau (CH)

(57) **Abstract**

A linear motor preferably intended for a lift installation comprises a primary element (1) with an armature (2) having consecutive open slots (3) for a plurality of coils disposed in said slots (3) and a secondary element (4) or inductor with a plurality of permanent magnets (5, 6) arranged with alternating polarity on a supporting structure (7). Means are provided to ensure a constant air-gap (L) between the primary element (1) and the secondary element (4). The magnets are arranged according to sequences of four elements comprising a permanent magnet (5) with the N polarity facing upwards, a first intermediate magnetic element (8), a permanent magnet (6) with the S polarity facing upwards and a second intermediate magnetic element (8). The magnets (5, 6) and the intermediate magnetic elements (8) have different magnetic properties.

## Description

The present invention relates to a hybrid permanent magnet motor as defined in the preamble of claim 1 and a lift installation as defined in claim 11.

The US Pat. No. 5,642,013 discloses a permanent magnet synchronous motor comprising an armature with consecutive open slots, a primary element consisting of plurality of coils disposed in said slots and a secondary element or inductor comprising a plurality of permanent magnets arranged on a flux-returning plate with a constant pole pitch, and more specifically formed from Neodymium-iron-boron (NdFeB) magnets with alternating polarity on the surface of a steel plate, and wherein the magnets are surface mounted on the back iron and placed one after another. For the primary, there are four coils wound on alternate teeth, connected in pairs to form two phase groups. The four coils of the motor give the following slot pattern:
α -α β -β -α α -β β

The magnetomotive force (MMF) of this winding has a prominent third harmonic, which the linear motor exploits by making the secondary magnet pitch equal to the pole pitch of the third harmonic. In terms of the third harmonic, the winding has 6 poles.

It is claimed that the overall reluctance force of the motor is quite small. However, one drawback of the motor is that the magnets, usually NdFeB, are not well protected because of the surface-mounted magnet configuration. Furthermore, special machine tools are required to install the magnets, which will increase the cost of production.

Another permanent magnet motor is disclosed in the patent applications WO 95/00432 and EP 0 688 735 A2. Said applications relating to a disc permanent motor for a roped lift describe a compact machine. However, a drawback of this motor is that it is necessary to have the secondary, i. e. the rotor, of the motor be fixed at the middle of the shaft in the axial direction. This disc permanent magnet synchronous motor is, therefore, not a linear directed drive from a linear motion viewpoint. It means that additional ropes are still required if this motor is used to drive a linear motion system, such as an elevator. The shape of the magnet is asymmetrical which will reduce the efficiency of the motor compared with symmetrical magnets. The asymmetrical geometry requires special machine tools for the magnets' installation.

Therefore, the object of the present invention is to provide an improved motor of the initially mentioned type.

The motor of the present invention is characterized by what is claimed in the characterizing part of claim 1.

Such a motor comprises a primary element with an armature having consecutive slots and
a plurality of coils disposed in the slots. Furthermore, it comprises a secondary element or inductor with a plurality of permanent magnets arranged with alternating polarity on a supporting structure. The primary element and the secondary element are arranged such that an air-gap exists inbetween. The magnets of the motor are arranged according to sequences of four elements comprising a permanent magnet with one polarity facing upwards, followed by an intermediate magnetic element, a permanent magnet with the other polarity facing upwards, and another intermediate magnetic element. The magnets and the intermediate magnetic elements have different magnetic properties.

A lift installation according to the present invention is characterized by what is claimed in the characterizing part of claim 11.

Other embodiments of the invention are characterized by the features presented in the dependent claims.

One of the advantages of the motor according to the present invention is that it can be easily and inexpensively manufactured and easily and quickly installed.

Additional advantages of the present invention are addressed in connection with the detailed description or are apparent from this description.

### Description of the drawings

The invention is described in detail below with reference to the following schematic drawings.
- FIG. 1: is a schematic illustration of the model structure of a motor, according to a preferred embodiment of the invention,
- FIG. 2: shows a flux plot of the hybrid permanent magnet motor,
- FIG. 3A: is a schematic illustration of a lift installation with a hybrid permanent magnet motor, in accordance with the present invention,
- FIG. 3B: is an elevation view of a single-sided flat permanent magnet linear motor, according to the invention, for a lift installation,
- FIG. 4: is a cross-section of the motor of FIG. 3B,
- FIG. 5: is a schematic illustration of the model structure of another motor, according to the invention.

### Detailled description

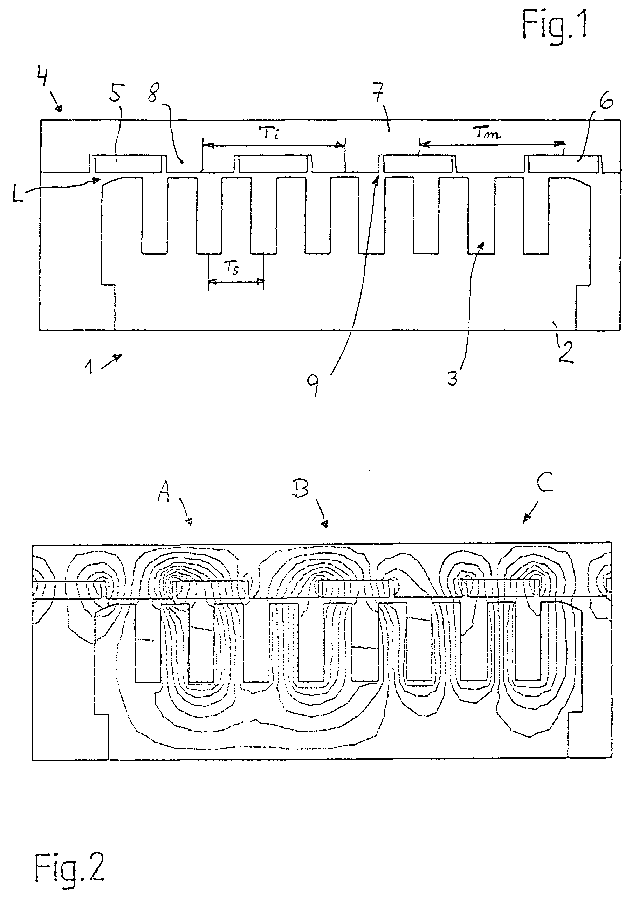

The permanent magnet motor of FIG. 1 comprises a primary element 1 with an armature 2 having consecutive open slots 3 for a plurality of coils disposed in said slots 3 and a secondary element 4 or inductor comprising a plurality of permanent magnets 5 and 6 arranged on a flux-returning plate 7 (herein referred to as supporting structure), preferably with a constant pole pitch. The coils of the primary element 1 may be arranged as a 2-phase, 3-phase or more phase winding. Note that the coils are not shown in this Figure. The permanent magnets 5 and 6 may be rare earth permanent magnets, such as Neodymium-iron-boron (NdFeB), cobalt, samarium or hard permanent ferrite magnets or superconducting magnets. The magnets 5 and 6 are disposed with alternating polarity on the surface of the plate 7 which may be a back iron with segments 8 intermediate to the inset-mounted permanent magnets 5, 6. The width of the permanent magnets 5 and 6 is preferably equal to the width of the segments 8. The back iron 7 with the segments 8 may be formed from a soft magnetic material such as mild steel, preferably having a relative permeability µᵣ >> 1. The permanent magnets 5 and 6 and the segments 8 of the back iron 7 are placed one after the other. According to FIG. 1, the back iron 7 is provided with recesses 9, in which the permanent magnets 5 and 6 are located, and the material portions or teeth between the recesses 9 constitute the segments 8. Thus the permanent magnets 5 and 6 are inset-mounted and separated by the segments or intermediate elements 8.

NdFeB is a well suited material since its long term stability has recently been improved. In addition, the price per kg is decreasing.

The primary element 1 and the secondary element 4 are separated by an air gap L, so that either the primary element 1 or the secondary element 4 of the permanent magnet motor is movable. In the primary element 1 the slots 3 are regularly disposed with a slot pitch Ts, and in the secondary element 4, the intermediate elements 8 are regularly disposed with a tooth pitch Ti, and the magnets 5 and 6 are also regularly disposed with a magnet pitch Tm. As shown in FIG. 1, the pitches Tm, Ti and Ts preferably fulfil the following conditions: Ti ≅ Tm and (3 x Ts) > Tm. However, according to the invention the pitches Ti, Tm and Ts are selected in such a way as to use the differences of the reluctance in the segments 8 for reinforcing the mechanical force or torque of the motor in addition to the normal working of the motor as a synchronous motor, so that the combination of the primary element 1 and the permanent magnets 5 and 6 of the secondary element 4 will act as a permanent magnet synchronous motor and the combination of the primary element 1 and the segments 8 of the rotor will operate as a reluctance motor, with the result, that the new structure presented herein will work as a hybrid permanent magnet motor.

FIG. 2 illustrates how the flux distribution in the hybrid permanent magnet motor gives different reluctance values in different zones A, B, and C. Theoretically, it should be possible to select the pitches Tm, Ti and Ts in such a way to obtain a maximum performance, i. e., the power and/or the torque of the resulting reluctance motor for given geometry and materials. However, in practice it will be sufficient to select said parameters in order to obtain a high performance of the motor due to the additional reluctance effect.

Due to the special configuration of the motor according to the present invention, the total volume of the permanent magnets is reduced approximately by 50%, and the normal force of it, which is a drawback for the installation, will be significantly reduced, and this will benefit the motor guide system and the system installation. However, because of the additional effect due to the reluctance, the useful output force will be comparable with respect to that of a conventional permanent magnet motor.

The embodiment of the invention according to FIG. 1 is robust, and the magnets are mechanically well protected because of the inset magnet installation. However, this feature is not essential for the invention, since the magnets 5 and 6 and the segments 8 may also be glued to a plate or sole 7 without recesses.

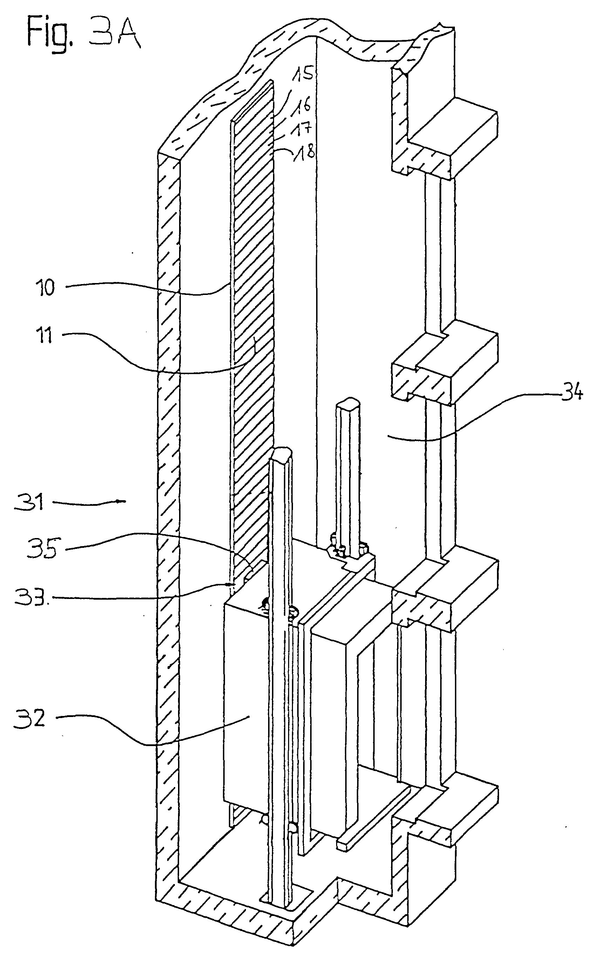

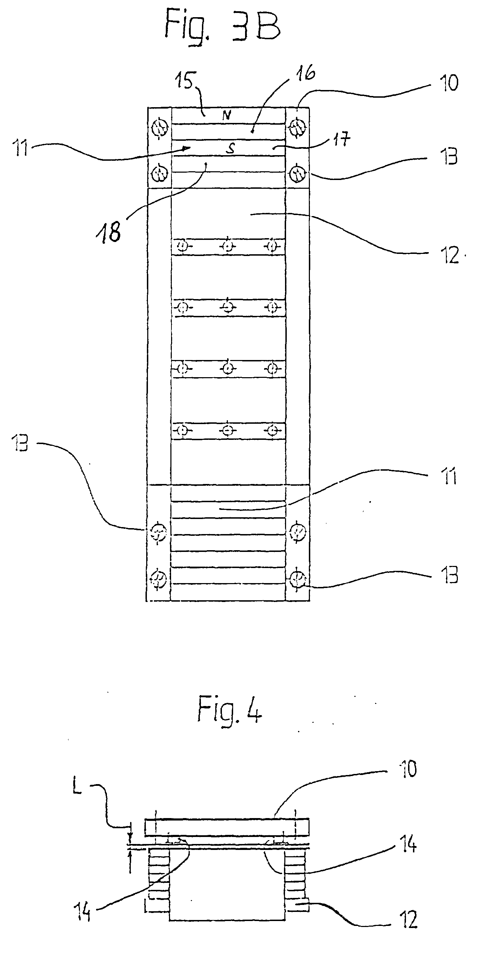

The hybrid motor - according to the present invention - can be used for a lift installation similar to that described in US Pat. No. 5,751,076, as schematically illustrated in FIG. 3A of the present patent application. FIGs. 3B and 4, respectively, show an elevation and a cross-section of a flat hybrid permanent magnet motor for this application. The secondary element 10 with the sequence of magnetic elements 11 according to the present invention, which in FIG. 3B are behind the primary element 12, is connected to a shaft of the lift by means of fastening elements 13 located at several points along the length of the secondary. Bearings 14, which are located at the primary element 12 as shown in FIG. 4 and which are likewise directly connected to the cage of the lift, maintain a constant air gap L between the primary element 12 and the secondary element 10. Each sequence of magnetic elements 11 comprises a flat permanent magnet 15 with the N polarity facing upwards, an intermediate magnetic element 16, a flat permanent magnet 17 with the S polarity facing upwards, and an intermediate magnetic element 18. The intermediate magnetic elements may be flat elements of mild iron or steel, plates of ferrite, preferably but not exclusively soft ferrite.

A flat hybrid permanent magnet motor 33 in accordance with the present invention can be used as a drive system for a lift installation 31, as shown in FIG. 3A. In this case, the secondary element 10 equipped with the permanent magnets and intermediate elements is located along the shaft 34 in which the lift cage 32 moves up and down. The primary element 35 provided with coils is mounted to the lift's cage 32 (on the outer side of the cage) and the primary moves with the cage 32 along the secondary element 10 arranged along the shaft 34. Bearing may be necessary to maintain a constant air gap between the primary and secondary elements.

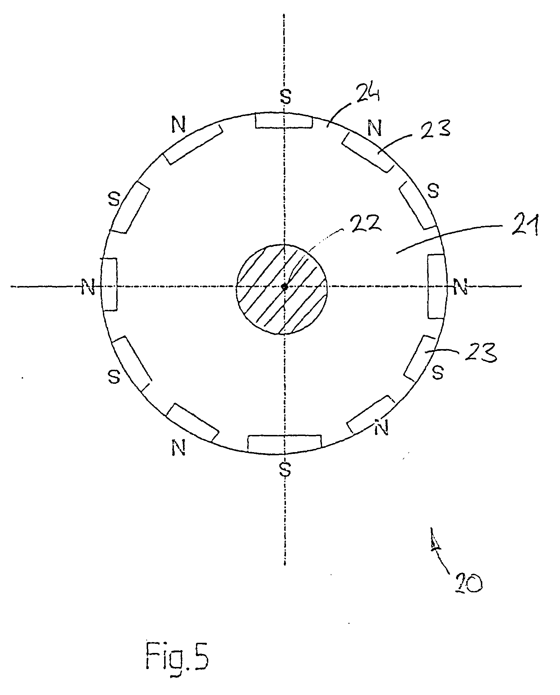

One other advantage of the motor according to the present invention is that an asymmetrical layout of the permanent magnets on the secondary element and hence the requirement of special machine tools to install the permanent magnets can be avoided. This and the reduction of magnets will lead to a low cost of production. The hybrid permanent magnet motor, which may be a linear motor, as shown in FIG. 1, or a rotary motor, as shown in FIG. 5, may be employed as gear-less drive to replace conventional geared drives, such as worm-gear, planetary-gear, and so on. The hybrid permanent magnet motor may be either of single- side or double-side configuration type. Additionally, it may be used for roped/rope-less elevators, machine tools and any other linear direct drive products.

The rotary motor 20 of FIG. 5 comprises a drum- or wheel-like (disc) supporting structure 21 with recesses facing radial away from the structure's axis 22. According to the embodiment presented in FIG. 5, there are twelve permanent magnets 23 situated in the recesses. Inbetween these magnets 23 there are intermediate (protruding) magnetic elements 24. These intermediate magnetic elements 24 may comprise the same material as the supporting structure 21. Ideally, the intermediate magnetic elements 24 are an integral part of the supporting structure 21. The recesses may be formed such that the magnets 23 are mechanically protected. This can be achieved by making the recesses a little bit deeper than the magnet's thickness. The diameter of the supporting structure 21 may be between 100 mm and 500mm. Preferably, the diameter is between 200 mm and 300 mm.

The 2-phase or 3-phase winding can be fitted into a lamination as a conventional linear or rotary motor. The ratio of soft iron to permanent magnet is usually 1 : 1. But it is also possible to have lager or smaller magnets as far as the pole pitch of the motor is unchanged. For a larger magnet, the motor efficiency will be improved but the volume and hence the cost of the permanent magnets will be accordingly higher. For a smaller magnet, the motor efficiency will be reduced, but the cost of the magnet will be lower. It is possible to replace the back iron by a non-magnetic material such as aluminium. In this case the normal force between the primary element and the secondary element will be smaller, but the motor efficiency will be reduced substantially. The magnets 15, 17 and/or the intermediate elements 16, 18 may be glued to the back iron.

The permanent magnets are inset-mounted, according to the present invention. In order to protect them, one may apply a thin layer (e.g., a foil or a resin) on their surface facing upwards.

Finally, the drive system of the linear or rotary hybrid permanent magnet motor may be a conventional drive system with IGBT/MOSFET for a variable-voltage variable-frequency drive. The position control may comprise a Hall effect sensor arranged on the primary element of the hybrid motor, or any other standard linear positioning device as disclosed in the mentioned US Pat. No. 5,751,076.

## Claims

1. A permanent magnet motor comprising:
a primary element (1) with an armature (2) having consecutive slots (3) ,
a plurality of coils disposed in said slots (3),
a secondary element (4) or inductor comprising a plurality of permanent magnets (15, 17) arranged with alternating polarity on a supporting structure (7), being arranged such that an air-gap (L) exists between the primary element (1) and the secondary element (4),
**characterized in that** the magnets (15, 17) are arranged according to sequences of four elements comprising a permanent magnet (15) with one polarity (N) facing upwards, a first intermediate magnetic element (16), a permanent magnet (17) with the other polarity (S) facing upwards, and a second intermediate magnetic element (18), and said magnets (15, 17) and said intermediate magnetic elements (16, 18) having different magnetic properties.

2. The motor according to claim 1, **characterized in that** said supporting structure (7) and/or said intermediate magnetic elements (16, 18) are flux-returning means of a material having a relative permeability µᵣ >> 1.

3. The motor according to claim 1 or 2, **characterized in that** in the primary element (1) the slots (3) are regularly disposed with a slot pitch Ts, and in the secondary element (4), the intermediate elements (8; 16, 18) are regularly disposed with an intermediate pitch Ti and the magnets (5, 6; 15, 17) are also regularly disposed with a magnet pitch Tm, and **in that** the pitches Tt, Tm and Ts are selected in such a way as to use the differences of the reluctance in the intermediate elements (8; 16, 18) for reinforcing the power or the mechanical force or the torque of the motor in addition to the normal working of the motor as a synchronous motor.

4. The motor according to one of the claims 1 to 3, **characterized in that** the combination of the primary element (1) and the permanent magnets (5, 6; 15, 17) of the secondary element (4) will act as a permanent magnet synchronous motor and the combination of the primary element (1) and the intermediate elements (6; 17) of the secondary element (4) will operate as a reluctance motor, with the result, that the resulting motor works as a hybrid permanent magnet motor.

5. The motor according to claim 3 or 4, **characterized in that** the pitches Ti, Tm and Ts are selected in such a way to obtain a maximum performance of a resulting hybrid motor for given geometry and materials.

6. The motor according to one of the claims 1 to 5, **characterized in that** the secondary element (7) is provided with recesses (9) for the insertion of the magnets (5, 6).

7. The motor according to one of the claims 1 to 6, **characterized in that** the secondary element (7) comprises neodymium rare earth permanent magnets.

8. The motor according to one of the claims 1 to 7, **characterized in that** it is formed as a linear motor for a lift installation.

9. A linear motor according to claim 8 for a lift installation, for which a cage is guided by guide rails in a shaft and driven directly by the linear motor, **characterized in that** the linear motor is constructed as a single-sided flat linear hybrid motor with permanent magnets (5, 6;15, 17) and intermediate magnetic elements (8; 16, 18) having a relative permeability µᵣ >> 1.

10. The linear motor according to claim 8 or 9, **characterized in that** the lift installation includes a pulse width modulator with a microprocessor and an H-Bridge with IGBT/MOSFETs for a frequency-variable drive of the motor.

11. A lift installation (31) comprising a lift cage (32) movable inside a shaft (34), comprising:
- a primary element (35) with an armature having consecutive slots,
- a plurality of coils disposed in said slots,
- a secondary element (10) or inductor comprising a plurality of permanent magnets (15, 17) arranged with alternating polarity on a supporting structure,
the primary element (35) and secondary element (10) being arranged such that an air-gap (L) exists between the primary element (35) and the secondary element (10),
the magnets (15, 17) being are arranged according to sequences of four elements comprising a permanent magnet (15) with one polarity (N) facing upwards, a first intermediate magnetic element (16), a permanent magnet (17) with the other polarity (S) facing upwards, and a second intermediate magnetic element (18), and said magnets (15, 17) and said intermediate magnetic elements (16, 18) having different magnetic properties,
the primary element (35) being mounted to said cage (32), and
the secondary element (10) being located along said shaft (34).
